# EUROPÄISCHE PATENTSCHRIFT

(11) **EP 1 184 567 B1**
(45) Veröffentlichungstag und Bekanntmachung des Hinweises auf die Patenterteilung: **17.05.2017**
(21) Anmeldenummer: 01119082.4
(22) Anmeldetag: 08.08.2001
(51) Int. Cl.: F03D 15/00, F16H 1/22

(54) **Getriebe für Windgeneratoren**
Gearbox for wind turbines
Boîte d'engrenage pour éoliennes

(30) Priorität: 01.09.2000 DE 10043593
(43) Veröffentlichungstag der Anmeldung: 06.03.2002
(73) Patentinhaber: Renk Aktiengesellschaft, 86159 Augsburg (DE)
(72) Erfinder: Hösle, Helmut, 86420 Diedorf (DE)
(74) Vertreter: Schlosser, Stefan

(56) Entgegenhaltungen:
- EP-A1- 0 093 461
- EP-A2- 1 046 838
- WO-A1-91/19916
- DE-A1- 19 857 914
- FR-A- 1 601 670
- THORNBLAD P: "GEARS FOR WIND POWER PLANTS" INTERNATIONAL SYMPOSIUM ON WIND ENERGY SYSTEMS, XX, XX, 1. Januar 1978 (1978-01-01), Seiten C6.89-C6.106, XP002133564

## Beschreibung

Die Erfindung betrifft ein Getriebe für Windgeneratoren gemäß dem Oberbegriff des Patentanspruchs 1, siehe z.B. WO 91/19916. Die Erfindung geht von der älteren Anmeldung DE 199 17 605.1-12 aus, die ein Aufsteckgetriebe für Windgeneratoren zeigt. Dieses Getriebe ist auf eine, im Turm einer Windanlage gelagerte, Rotorwelle aufgesteckt und stützt sich an dieser über zwei Lager ab. Mit Drehmomentstützen ist das Getriebegehäuse an den Turm der Anlage angebunden.

Die Rotorwelle wird am getriebefernen Ende von einem Rotorkopf mit Windflügeln angetrieben und leitet das Antriebsdrehmoment über ein Hohlrad in das Getriebe ein. Das Hohlrad ist mit einem Hohlradträger auf der Rotorwelle befestigt und treibt die Planetenräder einer ersten Planetenstufe an. Die gehäusefest gelagerten Wellen tragen jeweils ein weiteres Planetenrad einer zweiten Planetengetriebestufe, die über ein Sonnenrad die Welle eines Stirnrades antreibt. Ein, mit diesem Stirnrad kämmendes, Ritzel treibt über eine weitere Welle den Generator an. Solche Anlagen sind aus vielen Bauteilen aufwendig montiert und ergeben eine große Baulänge.

Hiervon ausgehend ist es die Aufgabe der Erfindung eine kompaktere Anlage zu schaffen, die kürzer und leichter baut sowie sich einfacher montieren läßt.

Diese Aufgabe wird erfindungsgemäß durch die kennzeichnenden Merkmale des Patentanpruchs 1 gelöst.

Durch den erfindungsgemäßen Entfall der Rotorwelle samt ihrer Lagerung im Turm ergibt sich ein besonders vorteilhafter kürzerer Aufbau der Anlage.

Dies bewirkt weiterhin die vorteilhafte Möglichkeit das Maschinenhaus zu verkürzen und durch die verminderte Anzahl der Bauteile ergibt sich ein geringeres Turmkopfgewicht, wodurch die Tragkonstruktion kleiner dimensioniert werden kann.

Durch den erfindungsgemäßen Aufbau und den Wegfall einer Fügestelle zwischen Getriebe und Rotorwelle vereinfacht sich die Montage wesentlich, wodurch die Montagezeit vorteilhaft verkürzt wird.

Durch unkomplizierte Verlängerung des Rotors, des Getriebegehäuses sowie des Hohlradträgers läßt sich der Stützabstand der Rotorlagerung verlängern und somit vorteilhaft einfach optimal an die äußeren Kräfteverhältnisse angepaßt werden. Die erfindungsgemäß vorgesehenen Gleitlager können beim Anlauf des Rotors in vorteilhafter Weise hydrostatisch angehoben und durch eine einfache Regelung mit steigender Drehzahl in hydrodynamischen Betrieb übergeführt werden.

Eine ballige Zahnkupplung zwischen dem Hohlradträger und dem Hohlrad selbst ermöglicht der Hohlradverzahnung eine Selbstzentrierung auf den Planetenrädern. Durch die vorteilhafte Integration des Rotors mit seiner Lagerung in das Getriebe trägt das Getriebegehäuse auch den Rotorkopf mit den Flügeln, so daß auf zusätzliche Trag- bzw. Lagerkonstruktionen verzichtet werden kann.

Nachfolgend wird die Erfindung anhand eines Ausführungsbeispiels näher erläutert.

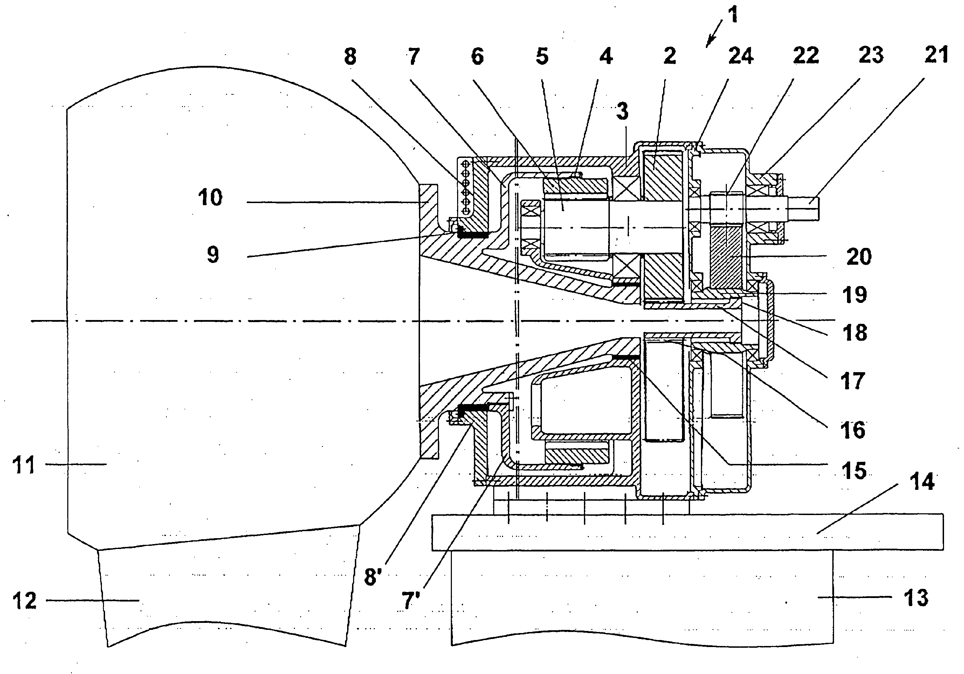

Die einzige Figur zeigt in abgebrochener Darstellung das Kopfende des Turmes (13) einer Windkraftanlage mit einer drehbaren Plattform (14). Auf der Plattform (14) ist das Gehäuse (3) des Getriebes (1) und ein Generator (nicht dargestellt) befestigt. Es ist jedoch auch möglich den Generator direkt an das Getriebe (1) anzuflanschen.

Die vom Wind erzeugte Drehbewegung wird vom Rotorkopf (11), der die Flügel (12) trägt, auf einen Rotor (10) übertragen. Der Rotorkopf (11) ist vorzugsweise mit dem Rotor (10) verschraubt - es ist jedoch auch möglich beide Teile in einem Stück herzustellen. Der Rotor (10) ist drehbar im Gehäuse (3, 8) gelagert und mit einem Hohlradträger (7) versehen.

Der Hohlradträger (7) nimmt das Hohlrad (6) auf, das die Kraft in ein bzw. mehrere Planetenräder (5) eintreibt. Auf deren im Gehäuse (3) drehbar gelagerten Wellen sind axial versetzt jeweils ein weiteres Planetenrad (2) angeordnet, die mit einem Sonnenrad (16) kämmen. Vom fliegend zwischen den Planetenrädern (2) zentrierten Sonnenrad (16) wird die Kraft über eine hohlgebohrte Sonnenradwelle (17) zu einer - vorzugsweise innenverzahnten - Nabe (19) geführt, die mit einer Außenverzahnung an der Sonnenradwelle (17) einen winkelbeweglichen Formschluß bildet. Die Nabe (19) trägt ein Stirnrad (20), das mit einem Ritzel (22), das vorzugsweise direkt auf die Abtriebswelle (21) angefräst ist, kämmt. Von der Abtriebswelle (21) wird die Antriebsleistung direkt oder indirekt in den Generator geleitet.

Durch das zylindrische Flanschgehäuse (23), das konzentrisch um das Stirnrad (20) herum angeordnet ist, können am Umfang des Stirnrades (20) in besonders vorteilhafter Weise mehrere Abtriebswellen (21) vorgesehen werden. Die Abtriebswellen (21) sind vorzugsweise wie oben bereits beschrieben mit Ritzeln (22) versehen und treiben jeweils einen Generator an. Es können beispielsweise zwei Abtriebswellen (21) in der vertikalen Symmetrieachse ober- bzw. unterhalb des Stirnrades (20) und / oder zwei Abtriebswellen (21) seitlich links und rechts in der horizontalen Symmetrieachse des Stirnrades (20) am Flanschgehäuse (23) angeordnet werden. Durch diese vorteilhafte Anordnung ist es auf einfache, kostengünstige Weise möglich mit einem Getriebe (1) mehrere Generatoren anzutreiben.

Der Rotor (10) ist, für die Aufnahme von Steuereinrichtungen zur Beeinflussung der Flügelstellungen, hohl. An den Rotor (10) schließt sich ein Rohr an, das durch das Flanschgehäuse (23) hindurch zur vom Rotorkopf (11) abgewendeten Seite des Getriebes (1) führt und die Montage von Stelleinrichtungen für die Steuereinrichtungen zuläßt.

Ein wesentlicher Kern der vorliegenden Erfindung liegt in der Integration des Rotors (10) in das Getriebe (1), wodurch das Getriebe (1) zusätzlich die Aufgabe übernimmt, die Gewichtskraft und die Betriebskräfte des Rotorkopfes (11) mit den Flügeln (12) zu tragen. Der erfindungsgemäße Rotor (10) überträgt die Antriebsleistung dabei über den Hohlradträger (7, 7') direkt in das Getriebe (1), wobei er die Aufgabe einer Antriebswelle übernimmt und damit das Prinzip der direkten Kraftleitung verwirklicht ist. Durch diese erfindungswesentlichen Neuerungen entfällt sowohl eine Rotorwelle sowie auch mindestens eine aufwendig zu montierende Fügestelle zur Übertragung der Antriebskraft.

Der Rotor (10) wird vorzugsweise durch zwei Gleitlager (9, 15) geführt, wobei ein Lager (15) sich an seinem - im Getriebeinneren liegenden - Ende befindet und am Grundkörper des Gehäuses (3) befestigt ist. Das andere Lager (9) trägt den Rotor (10) auf der dem Rotorkopf (11) zugewendeten Seite und ist an einem Getriebedeckel (8, 8') befestigt. An dieser Stelle, an welcher der Rotor (10) aus dem Getriebe (1) austritt ist ein nicht näher bezifferter Dichtring vorgesehen.

An dem dargestellten Ausführungsbeispiel ist das äußere Lager (15) als Bundlager ausgeführt und kann auch Axialkräfte aufnehmen. Das innen liegende Lager (15) ist als Loslager vorgesehen. Andere konstruktive Ausführungen zur Aufnahme der Axialkräfte sind auch möglich. Die Lager (9, 15) können beispielsweise auch als Wälzlager ausgeführt werden.

Durch die vorteilhafte kegelige Form des Rotors (10), dessen Durchmesser sich zum Rotorkopf (11) hin vergrößert, ergibt sich am äußeren Lager (9) durch den großen Lagerdurchmesser eine hohe Tragfähigkeit. Aufgrund der Anordnung des Rotors (10) kann die Lagerung (9) ganz nach außen in den Getriebedeckel (8, 8') gelegt werden, wodurch sich eine große Stützbreite zwischen den Rotor-Lagern (9, 15) ergibt. Ohne konstruktiven Aufwand kann diese Stützbreite noch verlängert werden, indem lediglich der Rotor (10) und das Gehäuse (3) breiter gebaut werden.

Beide Lager (9, 15) sind als hydrostatische Gleitlager ausgeführt, die von einer nicht dargestellten Pumpe mit Öl versorgt werden können und somit eine Anfahrhydrostatik besitzen. Zum Anfahren der Anlage werden die Lager (9, 15) hydrostatisch angehoben, indem die elektrische Pumpe mit Strom aus dem angeschlossenen Netz betrieben wird. Mit steigender Drehzahl des Rotors (10) kann durch eine Steuerungs- und Regelungseinheit die Ölpumpe angesteuert werden und der Ölförderdruck gezielt reduziert bzw. abgestellt werden. Dadurch können die Lager (9, 15) gezielt einzeln mit der erforderlichen Schmierölmenge bzw. dem erforderlichen Öldruck versorgt werden. Es lassen sich somit Betriebszustände einstellen, bei denen der Öldruck im Schmierspalt teils hydrodynamisch und teils hydrostatisch oder rein hydrodynamisch aufgebaut wird.

In der oberen Hälfte der Figur ist der Hohlradträger (7) als einteiliges Stück zusammen mit dem Rotor (10) hergestellt, wodurch eine weitere kraftübertragende Fügestelle entfällt. Bei dieser Ausführung ist der Gehäusedeckel (8) mit einer Teilfuge versehen, die bei dem dargestellten Ausführungsbeispiel vertikal verläuft. Die vorzugsweise zwei Hälften des Gehäusedeckels (8) werden bei der Montage miteinander verschraubt.

Eine weitere Ausführung ist in der unteren Bildhälfte dargestellt. In dieser Variante ist der Hohlradträger (7') als separates Teil an den Rotor (10) angebaut. Dabei kann die Fügestelle formschlüssig, beispielsweise mittels Vielnut- oder Kerbzahnprofil oder auch kraftschlüssig, beispielsweise mittels Preß-/Schrumpfsitz, Schrumpfscheibe oder Kegelsitz ausgeführt werden. Kombinationen aus Form- und Kraftschluß, beispielsweise Paßfedern mit Schrumpfsitz der zylindrischen Wellen-/Nabenflächen sind auch denkbar. Im Falle eines Zusammenbaus des Hohlradträgers (7') mit dem Rotor (10) kann der Gehäusedeckel (8') einteilig ausgeführt werden.
In beiden Ausführungsbeispielen (Hohlradträger und Rotor ein- oder mehrteilig) ist das Hohlrad (6) an seiner Außenumfangsfläche über eine ballige Zahnkupplung (4) mit dem Hohlradträger (7, 7') verbunden. Diese ermöglicht dem Hohlrad (6) gegenüber dem Hohlradträger (7, 7') eine Winkelbeweglichkeit und eine axiale Verschiebbarkeit. Dadurch kann sich die Verzahnung des Hohlrads (6) auf den Planetenrädern (5) selbst zentrieren. Vorzugsweise besteht diese Zahnkupplung (4) aus einer balligen Außenverzahnung am Hohlrad (6), die mit einer geraden Innenverzahnung am Hohlradträger (7, 7') zusammenwirkt.

Ohne konstruktiven Mehraufwand lassen sich die Planetengetriebestufen (6, 5, 2, 16) mit Schrägverzahnungen ausführen, wobei sich die Axialkräfte der Planetenräder (5, 2) ausgleichen und die Vorteile wie ruhigere Laufeigenschaften oder höhere Tragfähigkeit von Schrägverzahnungen nutzbar sind. Die auf das Hohlrad (6) wirkenden Axialkräfte müssen in diesem Fall entweder in das Gehäuse (3) oder in den Rotor (10) eingeleitet werden.
Durch eine elastische Befestigung, die eine begrenzte axiale Beweglichkeit der Sonnenradwelle (17) zuläßt, können Antriebsschwankungen, die auf ungleichmäßigen Windverhältnissen oder sonstigen Einflüssen beruhen, gemildert oder kompensiert werden.
Weiterhin ist es durch Mesung der - an der Sonnenradwelle (17) - auftretenden Axialkräfte möglich, Aussagen über die aktuellen Betriebsdaten der Anlage, wie Drehmoment, Leistung usw. zu erhalten. Mit Kenntnis dieser Daten kann dann entsprechend regelnd bzw. steuernd in den Betriebsablauf eingegriffen werden - z. B. Verstellung des Anstellwinkels der Flügel (12) oder Abschaltung bei Überlast und Gefahr der Zerstörung des Getriebes. Dazu ist vorzugsweise an der axial fest gelagerten Nabe (19) ein Sensor (18) angebracht, der die Kraft aufnimmt mit der die - axial elastisch an der Nabe (19) befestigte - Sonnenradwelle (17) auf die Nabe (19) drückt. Als Sensor (18) ist dafür z. B. eine Kraftmeßdose (auf piezoelektrischen, induktiven o. ä. Prinzipien beruhend) geeignet oder ein Wegaufnehmer, der die Relativbewegungen zwischen der Sonnenradwelle (17) und der Nabe (19) aufnimmt und mittelbar, über die Federkonstante des elastischen Verbindungsgliedes, Aufschluß über die auftretende Kraft gibt.

Die Planetenradwellen sind auf beiden Seiten der ersten Planetenräder (5) im - mit dem Gehäuse (3) eine integrative Einheit bildenden - Planetenträger gelagert. Auf dem freien Wellenende ist jeweils ein zweites Planetenrad (2) angebracht.
Das Gehäuse (3) wird hinter dem zweiten Planetengetriebesatz (2, 16) durch einen - mit entsprechenden Durchbrüchen versehenen - Lagerdeckel (24) abgeschlossen, der verdrehgesichert im Gehäuse (3) zentriert ist.
Das Flanschgehäuse (23) umschließt die Stirnradstufe (20, 22) und zentriert sich seinerseits verdrehgesichert an einem umlaufenden Absatz des Lagerdeckels (24). Die zum Gehäuse (3) hingerichteten Seiten der Abtriebswelle (21) und der Nabe (19) sind im Lagerdeckel (24) gelagert. Die jeweils zweiten Lagerungen von Abtriebswelle (21) bzw. Nabe (19) sind in die Außenwand des Flanschgehäuses (23) eingebracht. Durch den Einsatz des Lagerdeckels (24) kann beim Flanschgehäuse (23) auf eine horizontale Teilung, die ein Abdichtungsproblem mit sich brächte, verzichtet werden.

Das Getriebe (1) läßt sich je nach Ausführungsvariante entweder als komplett vormontierte Einheit auf die Plattform (14) aufbauen oder in Stufen montieren. Für Wartungszwecke läßt sich nach Demontage des zentralen Gehäusedeckels auf der Außenseite des Flanschgehäuses (23) das Sonnenrad (16) mitsamt der Sonnenradwelle (17) aus dem Getriebe (1) herausziehen.
Weiterhin ist es möglich die Funktion, der leicht zugänglichen Lager der nicht umlaufenden Planetenradwellen z. B. über Körperschallmessungen zu überwachen.

Durch die vorteilhafte Krafteinleitung über ein Hohlrad (6) in die erste Planetengetriebestufe (6, 5), die ohne ein - die Belastbarkeit begrenzendes - Sonnenrad auskommt, ergeben sich günstige Voraussetzungen für die Auslegung, so daß sehr kompakt gebaut werden kann. Die somit nach außen verlagerte Belastungsgrenze und die dadurch optimale Ausnutzung der Werkstoffkennwerte kann durch Einsatzhärten der Zähne des Hohlrades weiter erhöht werden. Bei gleichbleibender Leistungsübertragung und gleicher Übersetzung, ist es durch diese besonders vorteilhafte Maßnahme möglich, die Zahnbreite schmaler auszulegen oder den Durchmesser des Hohlrades (6) zu verkleinern. Dadurch kann das Bauvolumen und das Gewicht des Getriebes weiter verringert werden oder bei gleichen Abmessungen der Bauteile kann mit dem gleichen Getriebe eine größere Leistung übertragen werden.
Zur Erhöhung der Belastbarkeitsgrenze der Hohlradzähne können auch andere Verfahren der Oberflächenhärtung, wie beispielsweise Induktionshärten, Flammhärten oder kombinierte Verfahren wie das Carbonitrieren bzw. Nitrocarborieren, angewendet werden.

### Bezugszeichenliste

- 1: Getriebe
- 2: Planetenrad
- 3: Gehäuse
- 4: Zahnkupplung
- 5: Planetenrad
- 6: Hohlrad
- 7: Hohlradträger
- 7': Hohlradträger (angebaut)
- 8: Gehäusedeckel (mit Teilfuge)
- 8': Gehäusedeckel (einteilig)
- 9: Lager
- 10: Rotor
- 11: Rotorkopf
- 12: Flügel
- 13: Turm
- 14: Plattform
- 15: Lager
- 16: Sonnenrad
- 17: Sonnenradwelle
- 18: Sensor
- 19: Nabe
- 20: Stirnrad
- 21: Abtriebswelle
- 22: Ritzel
- 23: Flanschgehäuse
- 24: Lagerdeckel

## Patentansprüche

1. Getriebe (1) für Windgeneratoren mit einem Rotor (10), der über eine mehrstufige Planetengetriebeanordnung (6, 5, 2, 16) und mindestens eine Stirnradstufe (17, 19) mit mindestens einem Generator in Antriebsverbindung steht, **dadurch gekennzeichnet, dass** der Rotor (10) im Gehäuse (3, 8, 8') des Getriebes (1) gelagert ist und mit einem Hohlradträger (7, 7'), auf dem ein Hohlrad (6) angeordnet ist, verbunden ist, wobei der Rotor (10) und der Hohlradträger (7, 7') aus einem einteiligen Stück bestehen.

2. Getriebe (1) für Windgeneratoren nach Anspruch 1, **dadurch gekennzeichnet, daß** der Rotor (10) in Gleitlagern (9, 15) geführt ist, und mindestens ein Lager (9, 15) auch Axialkräfte aufnehmen kann, wobei die Lager (9, 15) hydrostatisch anhebbbar sind und durch gezielte Ansteuerung einer Ölpumpe in einen Betrieb mit teil- oder voll-hydrodynamischer Schmierung schaltbar sind.

3. Getriebe (1) für Windgeneratoren nach Anspruch 1, **dadurch gekennzeichnet, daß** der Hohlradträger (7) form- und/oder kraftschlüssig mit dem Rotor (10) verbunden ist.

4. Getriebe (1) für Windgeneratoren nach Anspruch 1, **dadurch gekennzeichnet, daß** das Hohlrad (6) durch eine Zahnkupplung (4) mit dem Hohlradträger (7, 7') verbunden ist.

5. Getriebe (1) für Windgeneratoren nach Anspruch 1, **dadurch gekennzeichnet, daß** der Rotor (10) und der Rotorkopf (11), der die Flügel (12) aufnimmt, aus einem einteiligen Stück bestehen.

6. Getriebe (1) für Windgeneratoren nach Anspruch 1, **dadurch gekennzeichnet, daß** die - auf der zur Planetengetriebestufe (2, 16) hingerichteten Seite angeordneten - Lagerungen der Stirnradstufe (20, 22) in einem Lagerdeckel (24), der am Gehäuse (3) befestigt ist, aufgenommen sind.

7. Getriebe (1) für Windgeneratoren nach Anspruch 1, **dadurch gekennzeichnet, daß** die Verzahnungen der Planetengetriebestufen (6, 5, 2, 16) schrägverzahnt sind.

8. Getriebe (1) für Windgeneratoren nach Anspruch 1, **dadurch gekennzeichnet, daß** die - das Sonnenrad (16) tragende - Sonnenradwelle (17) in Axialrichtung federnd beweglich angebunden ist.

9. Getriebe (1) für Windgeneratoren nach Anspruch 1 und 8, **dadurch gekennzeichnet, daß** ein Sensor (18) vorgesehen ist, der die Axialkraft der Sonnenradwelle (17) aufnimmt.

10. Getriebe (1) für Windgeneratoren nach einem der vorangegangenen Ansprüche, **dadurch gekennzeichnet, daß** die Zähne des Hohlrades (6) oberflächengehärtet sind.

11. Getriebe (1) für Windgeneratoren nach einem der vorangegangenen Ansprüche, **dadurch gekennzeichnet, daß** am Umfang des Stirnrades (20) zwei oder mehr Abtriebswellen (21) im Flanschgehäuse (23) angeordnet sind, deren Ritzel (22) mit dem Stirnrad (20) kämmen und jeweils einen Generator antreiben.

## Claims

1. A transmission (1) for wind generators with a rotor (10), which via a multi-stage planetary gear arrangement (6, 5, 2, 16) and at least one spur gear stage (17, 19) is drive-connected to at least one generator, **characterized in that** the rotor (10) is mounted in the housing (3, 8, 8') of the transmission (1) and is connected to an internal gear carrier (7, 7'), on which an internal gear (6) is arranged, wherein the rotor (10) and the internal gear carrier (7, 7') consist of a unitary piece.

2. The transmission (1) for wind generators according to Claim 1, **characterized in that** the rotor (10) is guided in sliding bearings (9, 15) and at least one bearing (9, 15) can also absorb axial forces, wherein the bearings (9, 15) can be hydrostatically lifted and can be switched through targeted activation of an oil pump into an operating mode with part of full hydrodynamic lubrication.

3. The transmission (1) for wind generators according to Claim 1, **characterized in that** the internal gear carrier (7) is positively and/or non-positively connected to the rotor (10).

4. The transmission (1) for wind generators according to Claim 1, **characterized in that** the internal gear (6) is connected to the internal gear carrier (7, 7') via a tooth coupling (4).

5. The transmission (1) for wind generators according to Claim 1, **characterized in that** the rotor (10) and the rotor head (11), which receives the wings (12), consist of a unitary piece.

6. The transmission (1) for wind generators according to Claim 1, **characterized in that** the bearings of the spur gear stage (20, 22) arranged on the side directed towards the planetary gear stage (2, 16) are received in a bearing cap (24), which is fastened to the housing (3).

7. The transmission (1) for wind generators according to Claim 1, **characterized in that** the teeth of the planetary gear stages (6, 5, 2, 16) are helically cut.

8. The transmission (1) for wind generators according to Claim 1, **characterized in that** the sun gear shaft (17) - carrying the sun gear (16) - is connected resiliently moveably in axial direction.

9. The transmission (1) for wind generators according to Claim 1 and 8, **characterized in that** a sensor (18) is provided, which captures the axial force of the sun gear shaft (17).

10. The transmission (1) for wind generators according to any one of the preceding claims, **characterized in that** the teeth of the internal gear (6) are surface-hardened.

11. The transmission (1) for wind generators according to any one of the preceding claims, **characterized in that** on the circumference of the spur gear (20) two or more output shafts (21) are arranged in the flange housing (23), the pinions (22) of which mesh with the spur gear (20) and drive a generator each.

## Revendications

1. Transmission (1) pour éoliennes comportant un rotor (10), qui est en liaison d'entraînement par l'intermédiaire d'un dispositif de transmission planétaire à plusieurs étages (6,5,2,16) et d'au moins un étage d'engrenage droit (17,19) avec au moins un générateur, **caractérisée en ce que** le rotor (10) est positionné dans le carter (3,8,8') de la transmission (1) et est relié avec un support de couronne (7,7'), sur lequel une couronne (6) est disposée, dans laquelle le rotor (10) et le support de couronne (7,7') sont constitués d'une pièce en un seul tenant.

2. Transmission (1) pour éoliennes selon la revendication 1, **caractérisée en ce que** le rotor (10) est guidé dans des paliers lisses (9,15) et peut recevoir au moins un palier (9,15), et au moins un palier (9,15) peut absorber aussi des forces axiales, dans laquelle les paliers (9,15) peuvent être soulevés de manière hydrostatique et peuvent être commutés par commande ciblée d'une pompe à huile en fonctionnement avec lubrification partiellement ou totalement hydrodynamique.

3. Transmission (1) pour éoliennes selon la revendication 1, **caractérisée en ce que** le support de couronne (7) est relié par conjonction de forme et/ou force avec le rotor (10).

4. Transmission (1) pour éoliennes selon la revendication 1, **caractérisée en ce que** la couronne (6) est reliée par un accouplement denté (4) avec le support de couronne (7,7').

5. Transmission (1) pour éoliennes selon la revendication 1, **caractérisée en ce que** le rotor (10) et la tête de rotor (11), qui reçoit la pale (12), sont constitués d'une pièce en un seul tenant.

6. Transmission (1) pour éoliennes selon la revendication 1, **caractérisée en ce que** les paliers de l'étage d'engrenage droit (20,22) disposés sur le côté tourné vers l'étage d'engrenage planétaire (2,16) sont renfermés dans un couvercle de palier (24), qui est fixé sur le carter (3).

7. Transmission (1) pour éoliennes selon la revendication 1, **caractérisée en ce que** les dentures des étages de transmission planétaire (6,5,2,16) sont à denture oblique.

8. Transmission (1) pour éoliennes selon la revendication 1, **caractérisée en ce que** l'arbre d'engrenage solaire (17) portant l'engrenage solaire (16) est rattaché de manière mobile par ressort dans la direction axiale.

9. Transmission (1) pour éoliennes selon la revendication 1 et 8, **caractérisée en ce que** un capteur (18) est prévu, qui absorbe la force axiale de l'arbre d'engrenage solaire (17).

10. Transmission (1) pour éoliennes selon une des revendications précédentes, **caractérisé en ce que** les dents de la couronne (6) sont durcies en surface.

11. Transmission (1) pour éoliennes selon une des revendications précédentes, **caractérisée en ce que** sur la circonférence de l'engrenage droit (20) deux ou plus arbres d'entrainement (21) sont disposés dans le logement de bride (23), dont le pignon (22) s'engrène avec l'engrenage droit (20) et entraînent respectivement un générateur.
